# FASCICULE DE BREVET EUROPEEN

(11) **EP 1 628 843 B1**
(45) Date de publication et mention de la délivrance du brevet: **15.04.2009**
(21) Numéro de dépôt: 04733325.7
(22) Date de dépôt: 17.05.2004
(51) Int. Cl.: B60C 23/04

(54) **UNITE ROUE POUR DISPOSITIF DE SURVEILLANCE DE LA PRESSION DES PNEUS D'UN VEHICULE AUTOMOBILE**
RADEINHEIT FÜR KRAFTFAHRZEUGE MIT REIFENDRUCKÜBERWACHUNGSVORRICHTUNG
WHEEL UNIT FOR MOTOR VEHICLE TYRE PRESSURE MONITORING DEVICE

(30) Priorité: 02.06.2003 US 474988 P
(43) Date de publication de la demande: 01.03.2006
(73) Titulaire: Continental Automotive France, 31100 Toulouse (FR)
(72) Inventeur: LUCE, Dominique, F-31000 Toulouse (FR)
(74) Mandataire: Bonn, Roman Klemens
(86) Numéro de dépôt international: PCT/EP2004/005262
(87) Numéro de publication internationale: WO 2004/106093

(56) Documents cités:
- FR-A- 2 807 363
- FR-A- 2 814 702
- FR-A- 2 839 016
- TW-B- 515 764
- US-A- 5 637 926

## Description

La présente invention concerne une unité roue pour un dispositif de surveillance de la pression des pneus d'un véhicule automobile, tel que défini dans le préambule de la revendication 1 et connu par example du document WO 2004/093 342 A1.

Plus particulièrement cette unité roue est destinée à être fixée par collage ou cerclage sur chacune des jantes des roues du véhicule et à l'intérieur du pneumatique.

II est déjà connu d'équiper les roues de véhicules automobiles d'unité roue destinées à surveiller la pression des pneus. Ces unités roue sont placées à l'intérieur de chaque pneumatique et comportent des capteurs appropriés (pression, température, accélération...). Lorsqu'une pression anormale est détectée, un message d'alarme est émis vers le conducteur.

Ces unités roue sont en général constituées par un support fixé sur la jante maintenant fermement un boîtier électronique renfermant l'ensemble des composants nécessaires à la mesure (capteurs de pression et de température...), au traitement du signal mesuré puis à son émission vers une unité centrale située à distance dans le véhicule. Généralement la liaison entre l'unité roue et l'unité centrale se fait par ondes radio fréquences (RF).

Lorsque le véhicule est en déplacement chaque unité roue est soumise à une force centrifuge proportionnelle à la vitesse de rotation de la roue sur laquelle elle est montée. Ainsi la fixation de l'unité roue sur la jante doit être calculée pour supporter une telle force centrifuge sans risque de désolidarisation entre l'unité roue et la jante.

A cet effet il est possible de maintenir le boîtier dans un support lui même collé sur la jante. Le maintien du boîtier se fait alors par la périphérie de celui-ci par exemple par emboîtement élastique. Mais un tel maintien du boîtier par sa périphérie engendre au niveau de la couche de colle liant le support à la jante des forces (dues à la rotation de la roue) réparties sur la périphérie du support et tendant à provoquer l'arrachement par pelage de la couche de colle.

Cet effort entraîne le "pelage" de la couche de colle qui se sépare de la jante, comme on déroule un rouleau de papier adhésif. En effet, lorsqu'une couche de colle travaille en pelage, la force nécessaire pour provoquer l'arrachement est faible. Donc il n'est pas nécessaire que la force centrifuge s'exerçant à la périphérie du support soit importante pour que le phénomène de pelage ait lieu.

Un tel maintien du boîtier dans son support par sa zone périphérique entraîne donc des risques accrus de détérioration de la couche de colle (par pelage) même à faible vitesse de rotation de la roue.

La présente invention a pour but de pallier cet inconvénient en empêchant que la couche de colle ne travaille en pelage tout en fixant de manière fiable le support sur la jante.

A cet effet la présente invention concerne une unité roue avec les caractéristiques de la revendication 1.

En fixant le boîtier au support par sa partie centrale, la couche de colle interposée entre le support et la jante ne travaille plus en pelage mais en traction et cisaillement.

En effet la force centrifuge générée par la rotation de la roue s'exerce au centre du support sous la forme d'une traction entre le boîtier et son support au niveau de leur moyen de liaison, donc au centre. La couche de colle ménagée entre le support et la jante est donc soumise à une force de traction centrale. Cette couche de colle travaille donc en traction et en cisaillement. De ce fait la force nécessaire pour rompre la liaison collée entre le support et la jante est nettement plus importante que celle qui permet de rompre une couche de colle travaillant en pelage.

Ainsi en plaçant judicieusement la zone de liaison entre le support et le boîtier au centre du boîtier (qui est l'élément le plus lourd de l'ensemble et donc sur lequel s'applique en priorité la force centrifuge) on favorise le travail de la couche de colle en traction et cisaillement ce qui la rend plus robuste.

Avantageusement le moyen de retenu central du boîtier est réalisé selon un premier mode de réalisation, par un pion central traversant de part en part le boîtier et solidarisé à celui-ci au niveau de la face supérieure du boîtier, par emboîtement élastique d'une agrafe, goupille, écrou ou tout moyen analogue. Le pion central est, quant à lui, fixé à la jante par rivetage, vissage, écrou ou fait partie intégrante de la jante.

Selon un second mode de réalisation le moyen de retenu central du boîtier est réalisé par la coopération d'une agrafe et de deux anses centrales ménagées sur le support.

Avantageusement l'agrafe est placée sur le boîtier par coulissement dans une paire de rainures ménagées sur le boîtier et par emboîtement élastique sur les anses. Le moyen de liaison entre le boîtier et le support est donc constitué par cette agrafe placée selon l'invention au centre du boîtier. De ce fait dans ce second mode de réalisation aussi, la couche de colle reliant le support à la jante travaille en traction et cisaillement et non en pelage. La robustesse de la liaison jante / support est ainsi accrue.

Pour faciliter le positionnement du support par rapport à la jante, le support est muni d'une pluralité de zones de pré positionnement permettant un collage léger et temporaire du support sur la jante avant son collage définitif par une couche de colle présentant un fort pouvoir d'adhésion.

Avantageusement le support est muni de moyens d'amortissement pour contrecarrer les vibrations transmises par la roue au boîtier. Ces moyens d'amortissement servent également de guide de centrage pour assurer le positionnement du boîtier par rapport au support.

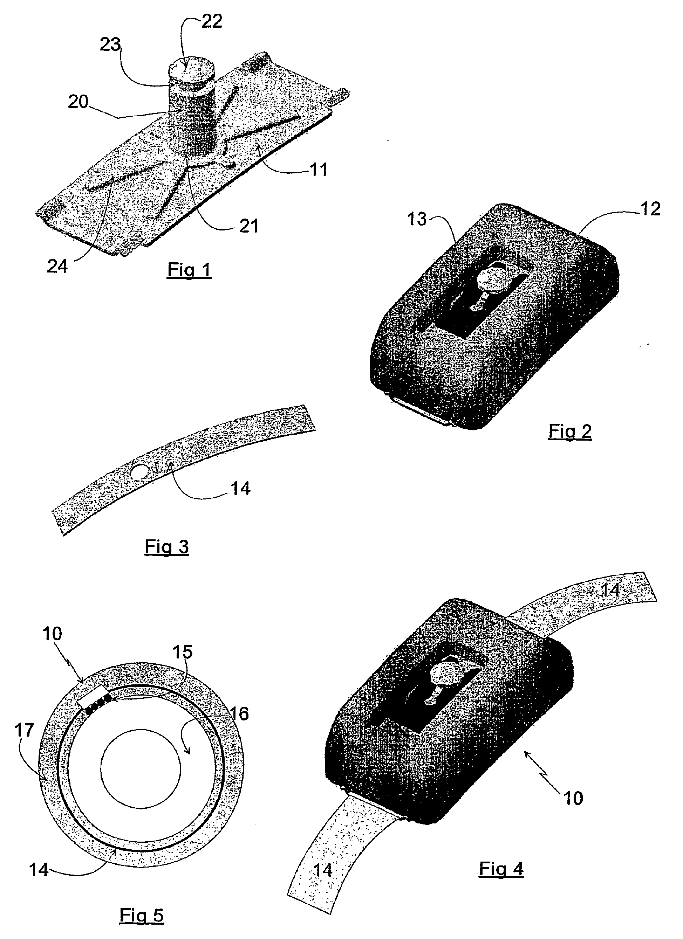

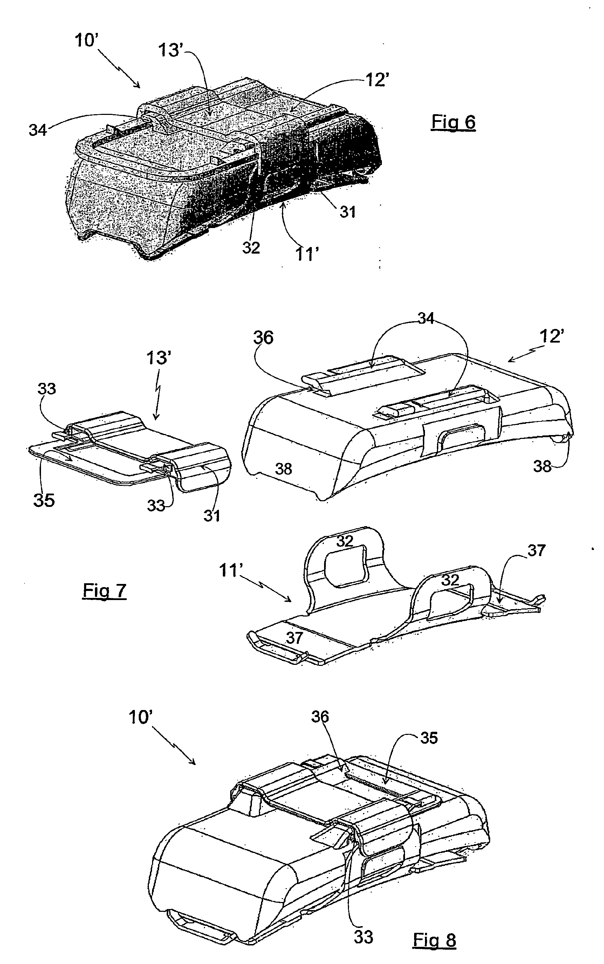

D'autres objets, caractéristiques et avantages de la présente invention ressortiront d'ailleurs de la description qui suit, à titre d'exemple non limitatif, en référence aux dessins annexés dans lesquels:
- **La** **figure 1** est une vue schématique en perspective représentant un support 11 selon un premier mode de réalisation de l'invention,
- **La** **figure 2** est une vue schématique en perspective montrant un boîtier électronique 12 monté sur un support 11 selon un premier mode de réalisation de l'invention,
- **La** **figure 3** est une vue schématique en perspective montrant une bande 14 de maintien de secours,
- **La** **figure 4** est une vue schématique en perspective illustrant une unité roue 10 selon un premier mode de réalisation de l'invention composée d'un boîtier 12 monté sur un support 11 et maintenu en position par une agrafe 13,
- **La** **figure 5** est une vue schématique en coupe montrant l'assemblage d'une unité roue selon l'invention sur une jante de véhicule automobile
- **La** **figure 6** est une vue schématique en perspective d'une unité roue 10' selon un second mode de réalisation de l'invention.
- **La** **figure 7** est une vue schématique en perspective illustrant le montage du support 11', de l'agrafe 13' et du boîtier 12' selon le second mode de réalisation de l'invention et,
- **La** **figure 8** est une vue schématique en perspective illustrant l'unité roue 10' de la figure 7 dans son état monté.

Selon la forme de réalisation illustrée aux figures 1 à 4, l'unité roue 10 selon la présente invention se compose:
- d'un support 11 (figure 1),
- d'un boîtier électronique 12 (figure 2)
- d'une agrafe de fixation 13 (figure 2) et
- d'une bande 14 de maintien de secours (figure 3).

L'ensemble de ces éléments est présenté sous forme montée à la figure 4.

L'unité roue selon la présente invention (quel que soit son mode de réalisation) est destinée à être collée 15 (figure 5) sur une jante 16 de roue de véhicule automobile.

L'unité roue est placée dans la chambre d'un pneu 17. Elle comporte un boîtier électronique 12 munie d'au moins un capteur de pression. Ce capteur mesure la pression régnant dans la chambre du pneu. D'autres capteurs (de température, d'accélération ...) peuvent également être présents dans le boîtier. Des composants électroniques sont également placés dans le boîtier afin de recueillir et traiter les signaux en provenance des capteurs. Une fois traité, ces signaux sont envoyés par signal radio fréquence vers une unité centrale (non représentée) située dans l'habitacle du véhicule. Cette unité centrale est reliée à un moyen d'affichage (situé dans le véhicule) transmettant au conducteur des informatisons et / ou messages d'alerte concernant notamment la pression régnant dans ses pneus. Les informations ou messages d'alerte peuvent également être transmis au conducteur par voie sonore, tactile, ...

Pour fixer l'unité roue 10 sur la jante 16 on colle 15 le support 11 (figure 1) sur la jante. La colle utilisée est du type cyanoacrylate ou epoxy. Cette colle présente un fort pouvoir d'adhésion. Le support 11 est réalisé en acier (ou matériau similaire) et présente un pion central 20 (moyen de retenu central) de forme globalement cylindrique. Ce pion central est fixé par tout moyen approprié au support. Une première extrémité 21 de ce pion est soudée (ou analogue) sur le support et sa seconde extrémité 22 porte une rainure annulaire 23. Des nervures de renfort 24 sont ménagées sur la base du support.

On notera que le pion central peut également être solidaire de la jante (soit en en faisant partie intégrante) soit en étant riveté (ou analogue) à travers la jante. Dans ce cas le support 11 est percé pour permettre le passage du pion à travers le support.

Le boîtier 12 présente une forme globalement parallélépipédique. II comporte un orifice traversant en son centre. Pour fixer le boîtier au support on insère le pion central 20 du support dans l'orifice traversant (non représenté) du boîtier. Pour tenir fermement en place le boîtier sur le pion central une agrafe 13 est insérée dans la rainure annulaire 23 du pion central. Cette agrafe enserre (voir figures 2 et 4) le pion central bloquant ainsi le boîtier sur le support. Cette agrafe présente également un effet ressort permettant de plaquer le boîtier contre le support.

Ainsi monté l'unité roue est donc collée contre la jante par l'intermédiaire de la couche de colle 15 située entre la jante et le support.

En cas de détérioration de la liaison collée entre le support et la jante et pour éviter que l'unité roue ne se déplace librement à l'intérieur d'un pneu en rotation (ce qui serait dangereux) une bande de maintien 14 est placée sur le pion central 22 (avant la mise en place du boîtier). Cette bande fait tout le tour de la jante (voir figure 5). Les deux extrémités de cette bande sont par exemple reliées par serrage.

Cette bande de maintien permet donc, en cas de rupture de la liaison collée, de s'assurer que l'unité roue est toujours fixée sur la jante.

Le support est muni d'un guide de passage (non représenté) connu en soi pour la bande de maintien 14.

Pour aider au pré positionnement du support sur la jante, la face inférieure du support (non visible sur les dessins) est munie d'au moins une zone de pré positionnement enduite d'une colle dont le pouvoir d'adhésion est léger et/ou temporaire. Ceci permet de maintenir en place le support pendant le séchage de la couche de colle 15. Une fois séchée cette colle 15 assure seule la liaison entre le support et la jante.

Dans un mode de réalisation préférentiel le support est muni de deux zones de pré positionnement du support par rapport à la jante. De préférence ces zones sont disposées de part et d'autre d'une zone de collage centrale 15 à fort pouvoir d'adhésion.

On notera que la couche de colle 15 travaille (lorsque la roue est entraînée en rotation) en traction et cisaillement. De ce fait la robustesse de la liaison support / jante est accrue. En effet, la force nécessaire à la rupture d'une couche de colle travaillant en traction et cisaillement est bien plus importante que celle nécessaire à la rupture d'une couche de colle travaillant en pelage. Ainsi lorsque la roue est entraînée en rotation la force centrifuge due au poids du boîtier s'applique sur le pion central 20 et donc au centre de la couche de colle (qui travaille ainsi en traction).

Ainsi en positionnant judicieusement la liaison boîtier / support au centre du boîtier on favorise le travail de la couche de colle en traction et cisaillement et donc on améliore la robustesse de la liaison collée.

Selon un second mode de réalisation de l'invention le moyen de retenu central est réalisé sous la forme d'une agrafe 13' coopérant avec deux anses centrales 32 du support (figures 6 à 8).

Cette agrafe 13' est située au centre du boîtier et présente deux ailes latérales 31 venant s'emboîter élastiquement sur les deux anses centrales 32 ménagées sur le support 11'. Pour solidariser complètement l'agrafe 13' au boîtier, l'agrafe est munie de deux glissières latérales 33 (figure 7) adaptées pour venir coulisser dans deux rainures 34 ménagées sur la face supérieure du boîtier 12'. Lorsque les glissières 33 de l'agrafe sont engagées dans les rainures 34 du boîtier, les deux pièces sont bloquées en translation l'une par rapport à l'autre, par une barre transversale 35 solidaire de l'agrafe et venant se bloquer dans des butées 36 du boîtier (figures 7 et 8). Ainsi bloquée l'agrafe est solidaire du boîtier grâce à la coopération des glissières et des rainures et est bloquée en translation par rapport au boîtier par la coopération de la barre transversale 35 et des butées 36.

En outre l'agrafe est solidaire du support par ses ailes 31 coopérant avec les anses 32 du support. Les éléments constituant l'unité roue se trouvent donc bloqués les uns par rapport aux autres et la liaison entre le boîtier (élément le plus lourd sur lequel s'exerce en majorité la force centrifuge) et le support est une liaison centrale. La couche de colle reliant le support 11' à la jante (non représentée) travaille donc en traction et cisaillement et non en pelage.

On notera que le support 11' présente des zones d'extrémités 37 formant ressort et constituant un moyen d'amortissement des vibrations éventuelles des extrémités libres 38 du boîtier lorsque la roue est entraînée en rotation. Ces moyens d'amortissement servent également de guidage et de centrage pour assurer le positionnement du boîtier par rapport au support, ceci pour éviter tout travail en pelage de la couche de colle 15.

Dans l'ensemble des modes de réalisation représentés les extrémités 38 du boîtier sont laissées libres dans le support, encore pour éviter tout travail en pelage de la couche de colle 15. De même le guide de passage pour la bande de maintien 14 est présent sur chaque support (selon le premier et le second mode de réalisation) ou boîtier. En effet ce guide de passage peut être réalisé par une simple gorge réalisée dans le boîtier. Dans ce cas la bande de maintien enserre le support et le boîtier sur la jante.

## Revendications

1. Unité roue (10, 10') pour dispositif de surveillance de la pression des pneus d'un véhicule automobile, la dite unité roue étant adaptée pour être fixée sur une jante (16) d'une roue de véhicule automobile, la dite unité comportant:
- un support (11, 11') et,
- un boîtier électronique (12, 12') regroupant:
- au moins un capteur de pression et / ou température,
- des composants électroniques nécessaires au traitement d'un signal en provenance de ces capteurs et,
- un dispositif d'émission du signal traité vers une unité centrale ménagée dans le véhicule,
la dite unité étant **caractérisée en ce que:**
- le boîtier (12, 12') est monté sur le support (11, 11') lui même solidarisé à la jante (16) par intermédiaire d'une couche de colle (15),
- le dit support comporte un moyen de retenu central (13, 20; 13', 32) adapté pour maintenir au moins une partie centrale du boîtier dans le support
- et **en ce que** t'unité comporte en outre un guide de passage pour une bande de maintien (14) de secours permettant de fixer le support et / ou le boîtier sur la jante en cas de rupture de la liaison collée (15) entre le support et la jante.

2. Unité selon la revendication 1, **caractérisée en ce que** boîtier comporte en outre des extrémités latérales (38) laissées libres dans le support.

3. Unité selon la revendication 1 ou 2, **caractérisée en ce qu'**elle est adaptée pour supporter une force centrifuge centrale agissant par traction et cisaillement sur la couche de colle (15) sans phénomène de pelage de cette couche de colle.

4. Unité selon l'une quelconque des revendications 1 à 3, **caractérisée en ce que** le moyen de retenu central coopère avec une agrafe (13') pour maintenir le boîtier dans le support.

5. Unité selon la revendication 4, **caractérisée en ce que** le moyen de retenu central (13') comporte une paire d'anses (32) coopérant avec la dite agrafe.

6. Unité selon la revendication 4 ou 5, **caractérisée en que** l'agrafe (13') est mise en place par coulissement dans une paire de rainures (34) ménagées sur le boîtier et par emboîtement élastique sur les anses (32) du support.

7. Unité selon l'une quelconque des revendications précédentes **caractérisée en ce que** le support (11, 11') est muni d'une zone de collage (15) à la jante et de deux zones de pré positionnement du support par rapport à la jante, les dites zones de pré positionnement étant disposées de part et d'autre de la zone de collage.

8. Unité selon l'une quelconque des revendications précédentes **caractérisée en ce qu'**elle comporte un moyen d'amortissement (37) pour contrecarrer les vibrations transmises par la roue au boîtier le dit moyen d'amortissement formant aussi guide de centrage adapté pour assurer le positionnement du boîtier par rapport au support.

9. Unité selon l'une quelconque des revendications 4 à 8, **caractérisée en ce que** l'agrafe (13') présente une élasticité adaptée pour plaquer le boîtier contre le support.

10. Unité selon la revendication 4, **caractérisée en ce que** le moyen de retenu central est un pion (20) traversant de part en part le centre du boîtier.

11. Unité selon la revendication 10, **caractérisée en ce que** le pion est muni d'une rainure annulaire (23) pour emboîtement d'une agrafe (13).

12. Unité selon l'une des revendications 9 à 11 **caractérisée en ce que** le pion central (20) est fixé par rivetage à travers la jante (16) et maintien en place le support (11).

## Claims

1. Wheel unit (10, 10') for a device for monitoring the pressure of motor vehicle tires, said wheel unit being designed to be fastened to a rim (16) of a motor vehicle wheel, said unit comprising:
- a support (11, 11'), and
- an electronic box (12, 12') combining:
- at least one pressure and/or temperature sensor,
- electronic components required for processing a signal from these sensors, and
- a device for transmitting the processed signal to a central unit provided in the vehicle,
said unit being **characterised in that:**
- the box (12, 12') is mounted on the support (11, 11'), itself secured to the rim (16) by means of an adhesive layer (15),
- said support comprises a central retention means (13, 20; 13', 32) designed to retain at least a central portion of the box in the support
- and **in that** the unit additionally comprises a passage guide for an auxiliary retaining band (14) which enables the support and/or the box to be fastened to the rim if the bonded connection between the support and the rim is broken.

2. Unit according to claim 1, **characterised in that** the box additionally comprises lateral ends (38) left free in the support.

3. Unit according to claim 1 or claim 2, **characterised in that** it is designed to withstand a central centrifugal force acting through tension and shear on the adhesive layer (15) without a peeling phenomenon being experienced by this adhesive layer.

4. Unit according to one of claims 1 to 3, **characterised in that** the central retention means works together with a clasp (13') for retaining the box in the support.

5. Unit according to claim 4, **characterised in that** the central retention means (13') comprises a pair of lugs (32) working together with said clasp.

6. Unit according to claim 4 or claim 5, **characterised in that** the clasp (13') is put in place by sliding in a pair of grooves (34) formed in the box and by elastic interlocking with the lugs (32) of the support.

7. Unit according to one of the preceding claims,
**characterised in that** the support (11, 11') is provided with a bonding region (15) for bonding to the rim and with two regions for prepositioning the support with respect to the rim, said prepositioning regions being arranged on either side of the bonding region.

8. Unit according to one of the preceding claims,
**characterised in that** it comprises a damping means (37) for opposing the vibrations transmitted to the box by the wheel, said damping means also forming a centring guide designed for positioning the box with respect to the support.

9. Unit according to one of claims 4 to 8, **characterised in that** the clasp (13') has an elasticity designed to press the box against the support.

10. Unit according to claim 4, **characterised in that** the central retention means is a pin (20) passing right through the centre of the box.

11. Unit according to claim 10, **characterised in that t**he pin is provided with an annular groove (23) for fitting a clasp (13).

12. Unit according to one of claims 9 to 11, **characterised in that** the central pin (20) is fastened by riveting through the rim (16) and keeps the support (11) in place.

## Patentansprüche

1. Radeinheit (10, 10') für Kraftfahrzeuge mit Reifendrucküberwachungsvorrichtung, wobei die Radeinheit angepasst ist, um auf einer Felge (16) eines Kraftfahrzeugrades befestigt zu werden, wobei die Einheit Folgendes umfasst:
- einen Träger (11, 11') und
- ein Elektronikgehäuse (12, 12'), umfassend:
- mindestens einen Druck- und/oder Temperaturfühler,
- Elektronikkomponenten, die für die Verarbeitung eines Signals, das aus diesen Fühlern stammt, notwendig sind, und
- eine Vorrichtung zum Aussenden des verarbeiteten Signals an eine Zentraleinheit, die im Fahrzeug eingerichtet ist,
wobei die Einheit **dadurch gekennzeichnet ist, dass**:
- das Gehäuse (12, 12') auf dem Träger (11, 11') befestigt ist, der seinerseits mithilfe einer Klebstoffschicht (15) fest mit der Felge (16) verbunden ist,
- der Träger ein zentrales Rückhaltemittel (13, 20; 13', 32) umfasst, das angepasst ist, um mindestens einen Mittelteil des Gehäuses auf dem Träger festzuhalten
- und **dadurch**, dass die Einheit des Weiteren eine Durchlaufführung für ein Sicherheitshalteband (14) umfasst, das das Befestigen des Trägers und/oder des Gehäuses auf der Felge im Falle eines Bruches der Klebeverbindung (15) zwischen dem Träger und der Felge ermöglicht.

2. Einheit nach Anspruch 1, **dadurch gekennzeichnet, dass** das Gehäuse des Weiteren seitliche Enden (38) umfasst, die frei auf dem Träger belassen werden.

3. Einheit nach Anspruch 1 oder 2, **dadurch gekennzeichnet, dass** sie angepasst ist, um eine zentrale Zentrifugalkraft zu ertragen, die durch Zug und Scherung auf die Klebstoffschicht (15) einwirkt, ohne Abblätterungserscheinung an dieser Klebstoffschicht.

4. Einheit nach einem der Ansprüche 1 bis 3, **dadurch gekennzeichnet, dass** das zentrale Rückhaltemittel mit einer Klammer (13') zusammenwirkt, um das Gehäuse auf dem Träger festzuhalten.

5. Einheit nach Anspruch 4, **dadurch gekennzeichnet, dass** das zentrale Rückhaltemittel (13') ein Paar Henkel (32) umfasst, die mit der Klammer zusammenwirken.

6. Einheit nach Anspruch 4 oder 5, **dadurch gekennzeichnet, dass** die Klammer (13') durch Verschieben in einem Paar Rillen (34), die auf dem Gehäuse eingerichtet sind, und durch elastisches Einrasten in die Henkel (32) des Trägers angeordnet wird.

7. Einheit nach einem der vorhergehenden Ansprüche, **dadurch gekennzeichnet, dass** der Träger (11, 11') mit einem Bereich zum Aufkleben (15) auf die Felge und mit zwei Bereichen zum Vorpositionieren des Trägers in Bezug auf die Felge ausgestattet ist, wobei die Bereiche zum Vorpositionieren auf beiden Seiten des Bereichs zum Aufkleben angeordnet sind.

8. Einheit nach einem der vorhergehenden Ansprüche, **dadurch gekennzeichnet, dass** sie ein Dämpfungsmittel (37) umfasst, um den Vibrationen, die vom Rad auf das Gehäuse übertragen werden, entgegenzuwirken, wobei das Dämpfungsmittel ebenfalls eine Zentrierführung bildet, die angepasst ist, um die Positionierung des Gehäuses in Bezug auf den Träger sicherzustellen.

9. Einheit nach einem der Ansprüche 4 bis 8, **dadurch gekennzeichnet, dass** die Klammer (13') eine Elastizität aufweist, die angepasst ist, um das Gehäuse gegen den Träger zu drücken.

10. Einheit nach Anspruch 4, **dadurch gekennzeichnet, dass** das zentrale Rückhaltemittel ein Zapfen (20) ist, der die Mitte des Gehäuses von einer Seite zur anderen durchläuft.

11. Einheit nach Anspruch 10, **dadurch gekennzeichnet, dass** der Zapfen mit einer ringförmigen Rille (23) zum Einrasten in eine Klammer (13) ausgestattet ist.

12. Einheit nach einem der Ansprüche 9 bis 11, **dadurch gekennzeichnet, dass** der zentrale Zapfen (20) durch Vernietung mit der Felge (16) befestigt ist und den Träger (11) an Ort und Stelle hält.
